# EUROPÄISCHE PATENTSCHRIFT

(11) **EP 3 084 261 B1**
(45) Veröffentlichungstag und Bekanntmachung des Hinweises auf die Patenterteilung: **24.10.2018**
(21) Anmeldenummer: 14802841.8
(22) Anmeldetag: 17.11.2014
(51) Int. Cl.: F16F 15/12

(54) **DREHSCHWINGUNGSDÄMPFUNGSANORDNUNG FÜR DEN ANTRIEBSSTRANG EINES FAHRZEUGS**
TORSIONAL VIBRATION DAMPING ARRANGEMENT FOR THE DRIVE TRAIN OF A MOTOR VEHICLE
SYSTÈME D'AMORTISSEMENT DE VIBRATIONS DE TORSION POUR CHAÎNE CINÉMATIQUE D'UN VÉHICULE AUTOMOBILE

(30) Priorität: 20.12.2013 DE 102013226939
(43) Veröffentlichungstag der Anmeldung: 26.10.2016
(73) Patentinhaber: ZF Friedrichshafen AG, 88046 Friedrichshafen (DE)
(72) Erfinder: GROSSGEBAUER, Uwe, 97250 Erlabrunn (DE); WEIGAND, Thomas, 97990 Weikersheim (DE)
(86) Internationale Anmeldenummer: PCT/EP2014/074720
(87) Internationale Veröffentlichungsnummer: WO 2015/090777

(56) Entgegenhaltungen:
- DE-A1-102011 007 118
- DE-A1-102011 075 240

## Beschreibung

Die vorliegende Erfindung betrifft eine Drehschwingungsdämpfungsanordnung, für den Antriebsstrang eines Fahrzeugs, umfassend einen zur Drehung um eine Drehachse anzutreibenden Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Koppelanordnung zur Überlagerung der über die Drehmomentübertragungswege geleiteten Drehmomente vorgesehen sind, wobei im ersten Drehmomentübertragungsweg eine Phasenschieberanordnung zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten vorgesehen ist.

Aus der deutschen Patentanmeldung DE 10 2011 007 118 A1 ist eine gattungsgemäße Drehschwingungsdämpfungsanordnung bekannt, welche das in einen Eingangsbereich beispielsweise durch eine Kurbelwelle eines Antriebsaggregates eingeleitete Drehmoment in einen über einen ersten Drehmomentübertragungsweg übertragenen Drehmomentenanteil und einen über einen zweiten Drehmomentübertragungsweg geleiteten Drehmomentenanteil aufteilt. Bei dieser Drehmomentenaufteilung wird nicht nur ein statisches Drehmoment aufgeteilt, sondern auch die, im zu übertragenen Drehmoment enthaltenen Schwingungen bzw. Drehungleichförmigkeiten, beispielsweise generiert durch die periodisch auftretenden Zündungen in einer Antriebsaggregat, werden anteilig auf die beiden Drehmomentübertragungswege aufgeteilt. In einer Koppelanordnung werden die, über die beiden Drehmomentübertragungswege übertragenen Drehmomentenanteile wieder zusammengeführt und dann als ein Gesamtdrehmoment in den Ausgangsbereich, beispielsweise eine Reibkupplung oder dergleichen, eingeleitet.

In zumindest einem der Drehmomentübertragungswege ist eine Phasenschieberanordnung vorgesehen, welche nach Art eines Schwingungsdämpfers, also mit einer Primärseite und einer durch die Kompressibilität einer Federanordnung bezüglich dieser verdrehbaren Sekundärseite, aufgebaut ist. Insbesondere dann, wenn dieses Schwingungssystem in einen überkritischen Zustand übergeht, also mit Schwingungen angeregt wird, die über der Resonanzfrequenz des Schwingungssystems liegen, tritt eine Phasenverschiebung von bis zu 180° auf. Dies bedeutet, dass bei maximaler Phasenverschiebung die vom Schwingungssystem abgegebenen Schwingungsanteile bezüglich der vom Schwingungssystem aufgenommenen Schwingungsanteile um 180° phasenverschoben sind. Da die über den anderen Drehmomentübertragungsweg geleiteten Schwingungsanteile keine oder ggf. eine andere Phasenverschiebung erfahren, können die in den zusammengeführten Drehmomentenanteilen enthaltenen und bezüglich einander dann phasenverschobenen Schwingungsanteile einander destruktiv überlagert werden, so dass im Idealfall das in den Ausgangsbereich eingeleitete Gesamtdrehmoment einem ein im Wesentlichen keine Schwingungsanteile enthaltenes statisches Drehmoment ist.

Ausgehend vom erläuterten Stand der Technik ist die Aufgabe der vorliegenden Erfindung, eine Drehschwingungsdämpfungsanordnung, bevorzugt bei axial schmalen Bauräumen, so weiterzubilden, dass diese kostengünstig und mit vielen Gleichteilen hergestellt werden kann.

Diese Aufgabe wird durch eine gattungsgemäße Drehschwingungsdämpfungsanordnung, welche zusätzlich das kennzeichnende Merkmal des Anspruches 1 umfasst, gelöst.

Gemäß der Erfindung wird diese Aufgabe gelöst durch eine Drehschwingungsdämpfungsanordnung für den Antriebsstrang eines Fahrzeugs, umfassend einen zur Drehung um eine Drehachse (A) anzutreibenden Eingangsbereich und einen Ausgangsbereich und einen ersten Drehmomentübertragungsweg und parallel dazu einen zweiten Drehmomentübertragungsweg, die beide von dem Eingangsbereich ausgehen und eine, mit dem Ausgangsbereich in Verbindung stehende Koppelanordnung zur Überlagerung der über die beiden Drehmomentübertragungswege geleiteten Drehmomente, wobei die Koppelanordnung ein Planetengetriebe mit einem Planetenradträger, einem Planetenradbolzen, ein Planetenradelement, ein Abtriebselement und ein mit dem Abtriebselement drehfest verbundenes Ausgangsflanschelement umfasst, und eine Phasenschieberanordnung für den ersten Drehmomentübertragungsweg zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten und einen Nassraum, der die Koppelanordnung und die Phasenschieberanordnung umschließt und ein Flanschelement, das konzentrisch zur Drehachse A angeordnet ist und sich radial außerhalb eines Befestigungsdurchmessers eines Befestigungselements an ein Antriebsaggregat und radial innerhalb des Planetengetriebes positioniert ist, sowie einem Abdeckelement, das in axialer Richtung zu dem Ausgangsbereich die Drehschwingungsdämpfungsanordnung räumlich begrenzt, wobei der Nassraum zu einem Umgebungsbereich mittels eines ersten Dichtungselements und eines zweiten Dichtungselements abgedichtet ist, wobei das erste Dichtungselement und das zweite Dichtungselement baugleich ausgeführt sind, wobei das erste Dichtungselement zwischen dem Abtriebselement und dem Flanschelement angeordnet ist und wobei das zweite Dichtungselement zwischen dem Abdeckelement und dem Abtriebsflanschelement angeordnet ist.

Durch die Verwendung von zwei baugleichen Dichtungselementen kann eine Anzahl von unterschiedlichen Bauteilen für die Drehschwingungsdämpfungsanordnung reduziert werden. Dies ist besonders vorteilhaft um die Herstellungskosten und die Montagekosten zu reduzieren.

Dabei kann eine Primärmasse der Drehschwingungsdämpfungsanordnung drehfest mit zum Beispiel hier der Kurbelwelle und ebenfalls drehfest mit einem Ansteuerblech verbunden sein. Weiter ist dabei ein Planetenradträger der Koppelanordnung ebenfalls drehfest mit der Primärmasse verbunden und wird hier aus der Primärmasse gebildet. Die Verbindung kann vorteilhaft durch mehrfach am Umfang angeordnete Kurbelwellenschrauben realisiert werden. Diese Komponenten ergeben zusammen mit den Planetenrädern eine Primärseite der Leistungsverzweigung. Eine Federanordnung der Phasenschieberanordnung wird über zumindest ein Ansteuerblech von der Primärmasse angesteuert. Ein Ausgang der Phasenschieberanordnung ist drehfest mit einem Antriebshohlradelement verbunden. Hierbei kann das Antriebshohlradelement aus einem Antriebshohlradträger und einem Antriebshohlrad bestehen oder aus einem Bauteil gefertigt sein. Der Federanordnung der Phasenschieberanordnung überträgt das Drehmoment an den Antriebsholradträger. An dem Antriebshohlradträger befindet sich drehfest ein Antriebshohlrad. Zusätzlich kann eine Zusatzmasse zur Erhöhung des Massenträgheitsmoments drehfest am Antriebsholradträger angebracht werden. Auf dem Planetenradträger, der drehfest mit der Primärmasse verbunden ist, sind die gestuften oder ungestuften Planetenräder drehbar gelagert. Diese kämmen mit dem Antriebshohlrad und einem Abtriebshohlrad, das drehfest mit einem Abtriebshohlradträger verbunden ist und zusammen als Abtriebselement bezeichnet werden kann. Mit dem Abtriebshohlradträger ist drehfest ein Abtriebsflanschelement verbunden. An diesem kann beispielsweise über eine Passverzahnung eine drehfeste Verbindung mit der Getriebeeingangswelle hergestellt werden, eine Reibkupplung, ein Wandler oder ein ähnliches Aggregat positioniert werden.

Ein Innenbereich der Drehschwingungsdämpfungsanordnung, der auch als ein gemeinsamer Nassraum von Phasenschieberanordnung und Koppelanordnung bezeichnet werden kann, wird durch ein erstes Dichtungselement und ein zweites Dichtungselement zu einem Umgebungsbereich abgedichtet. Dabei ist die Abdichtung so ausgelegt, dass ein viskoses Medium, das sich zur Schmierung und oder zur Kühlung im Innenbereich der Drehschwingungsdämpfungsanordnung befindet, nicht zu dem Umgebungsbereich gelangen kann. Dabei ist das erste Dichtungselement zwischen dem Flanschelement und einer radial nach innen geführten Verlängerung des Abtriebsplanetenradträgers positioniert. Das zweite Dichtungselement ist zwischen dem Abtriebsflanschelement und dem Abdeckelement, das drehfest mit der Primärmasse verbunden ist, positioniert. Dabei sind das erste und das zweite Dichtungselement baugleich ausgeführt. Das Abtriebselement und das Flanschelement können sich relativ zueinander um die Drehachse A verdrehen. Das zwischen dem Abtriebselement und dem Flanschelement positionierte erste Dichtungselement dichtet hierbei auch unter dieser relativen Bewegung den Nassraum gegenüber dem Umgebungsbereich ab. Dabei kann das erste Dichtungselement vorteilhaft als Radialwellendichtring ausgebildet sein.

Dabei ist das Abdeckelement drehfest mit der Primärmasse verbunden. Das Abtriebsflanschelement ist drehfest mit dem Abtriebshohlradträger verbunden. Das Abdeckelement kann sich dabei zu dem Abtriebshohlradträger relativ um die Drehachse A verdrehen. Das zwischen dem Abdeckelement und dem Abtriebshohlradträger positionierte zweite Dichtungselement dichtet hierbei auch unter dieser relativen Bewegung den Nassraum gegenüber dem Umgebungsbereich ab. Dabei kann das zweite Dichtungselement vorteilhaft als Radialwellendichtring ausgebildet sein.

Zur Erleichterung der Montage der Kurbelwellenschrauben ist das Abtriebsflanschelement mit einer oder mehreren Bohrungen versehen, die einen Zugang zu den Kurbelwellenschrauben ermöglichen.

Vorteilhafte Ausgestaltungen und Weiterbildungen der Erfindung sind in den abhängigen Ansprüchen angegeben.

In einer vorteilhaften Ausführung umfasst die Koppelanordnung ein erstes und ein zweites Eingangsteil, in die über den ersten und den zweiten Drehmomentübertragungsweg geführte Drehmomente eingeleitet werden, sowie eine Überlagerungseinheit, in der die eingeleiteten Drehmomente wieder zusammengeführt werden und ein Ausgangsteil, das das zusammengeführt Drehmoment zum Beispiel an eine Reibkupplung weiterführt. Das erste Eingangsteil ist in seiner Wirkrichtung auf der einen Seite mit der Phasenschieberanordnung und auf der anderen Seite mit der Überlagerungseinheit verbunden. Das zweite Eingangsteil ist in seiner Wirkrichtung auf der einen Seite mit dem Eingangsbereich und auf der anderen Seite mit der Überlagerungseinheit verbunden. Die Überlagerungseinheit wiederum ist in ihrer Wirkrichtung auf der einen Seite sowohl mit dem ersten als auch mit dem zweiten Eingangsteil und auf der anderen Seite mit dem Ausgangsteil verbunden. Das Ausgangsteil bildet den Ausgangsbereich und kann in einer vorteilhaften Ausgestaltung eine Reibkupplung aufnehmen.

Um in einfacher Art und Weise die Phasenverschiebung in einem der Drehmomentübertragungswege erlangen zu können, wird vorgeschlagen, dass die Phasenschieberanordnung ein Schwingungssystem mit einer Primärmasse und einer gegen die Wirkung einer Federanordnung bezüglich der Primärmasse um die Drehachse A drehbares Zwischenelement umfasst. Ein derartiges Schwingungssystem kann also nach Art eines an sich bekannten Schwingungsdämpfers aufgebaut sein, bei dem insbesondere durch Beeinflussung der primärseitigen Masse und der sekundärseitigen Masse bzw. auch der Steifigkeit der Federanordnung die Resonanzfrequenz des Schwingungssystems definiert eingestellt werden kann und damit auch festgelegt werden kann, bei welcher Frequenz ein Übergang in den überkritischen Zustand auftritt.

In einer weiteren vorteilhaften Ausgestaltung kann die Drehschwingungsdämpfungsanordnung in der Form ausgeführt sein, dass der Innendurchmesser des ersten und des zweiten Dichtungselements größer ist, als der Befestigungsdurchmesser mit dem die Drehschwingungsdämpfungsanordnung an dem Antriebsaggregat drehfest befestigt ist. Diese Ausführungsform ist besonders vorteilhaft, da dadurch ein Zugang zu den Kurbelwellenschrauben und damit eine Montage der Drehschwingungsdämpfungsanordnung an die Kurbelwelle erleichtert wird.

In einer weiteren vorteilhaften Ausführungsform können das erste und das zweite Dichtungselement als ein Radialwellendichtring ausgeführt sein. Der Radialwellendichtring eignet sich besonders dafür um zwei Bauteile, die sich relativ zueinander verdrehen können, dichtend miteinander zu verbinden. Dabei können bekannte Bauformen des Radialwellendichtringes Anwendung finden.

In einer weiteren vorteilhaften Ausführungsform kann das Flanschelement drehfest mit dem Planetenradträger verbunden sein. Dabei dient das Flanschelement zu einer Begrenzung des Planetengetriebes nach radial innen, wobei ein Innendurchmesser des Flanschelements größer ist, als der Befestigungsdurchmesser der Drehschwingungsdämpfungsanordnung an die Kurbelwelle. Dadurch können die Kurbelwellenschrauben vorteilhaft mit einem dazugehörigen Werkzeug, wie zum Beispiel einem Inbusschlüssel, zur Montage erreicht werden. Das Flanschelement kann dabei vorzugsweise an den Planetenradträger mittels einer Schweißverbindung, einer Klebeverbindung, oder einem vergleichbaren Verfahren drehfest und für ein viskoses Medium undurchlässig verbunden werden.

In einer weiteren günstigen Ausführungsform ist das Flanschelement mittels zumindest einer Kurbelwellenschraube drehfest mit dem Planetenradträger an der Kurbelwelle befestigt ist. Dabei kann das Flanschelement topfförmig ausgebildet sein, was durch einen Umformprozess kostengünstig hergestellt werden kann. Dabei kann Das Flanschelement zumindest eine Durchgriffsöffnung umfassen, durch die die Kurbelwellenschraube zur Befestigung an die Kurbelwelle gesteckt wird. Dabei kann das Flanschelement in einem Kontaktbereich mit einem Schraubenkopf der Kurbelwellenschraube als ein Un terlagscheibenbereich dienen, um die Flächenpressung des Schraubenkopfes an einem Kontaktbereich des Planetenradträgers zu reduzieren. Dabei kann vorteilhaft der Kontaktbereich des Flanschelements gehärtet sein. Folglich kann ein derart ausgeführtes Flanschelement als eine Unterlagscheibe, als eine innere räumliche Begrenzung und als ein Aufnahmebereich für das erste Dichtungselement ausgeführt sein.

Eine weitere vorteilhafte Ausgestaltung sieht vor, dass das Flanschelement den Planetenradbolzen auf einer Seite abstützt. Dies ist besonders vorteilhaft, um den Planetenradbolzen gegen ein Kippen abzustützen, wenn der Planetenradbolzen nur mit einem Ende an dem Planetenradträger befestigt ist. Dabei kann die Befestigung des Planetenradbolzens an dem Planetenradträger und / oder an dem Flanschelement vorteilhaft durch eine Nietverbindung, eine Schraubverbindung, eine Schweißverbindung oder durch jede andere vergleichbare Verbindungsmethode ausgeführt werden.

Eine weitere günstige Ausgestaltung sieht vor, dass der Nassraum ein viskoses Medium umfasst. Dieses viskose Medium können vorteilhaft Öle oder Schmierfette sein, die zu einer Reduzierung der Reibung und / oder zu einer Kühlung der Drehschwingungsdämpfungsanordnung benutzt werden.

Im Folgenden werden bevorzugte Ausführungsbeispiele der Erfindung anhand der beiliegenden Figuren erläutert. Es zeigt:
Fig. 1 eine Drehschwingungsdämpfungsanordnung mit einem ersten Dichtungselement und einem zweiten Dichtungselement, die baugleich ausgeführt sind.
Fig. 2 eine Drehschwingungsdämpfungsanordnung wie in Fig. 1, jedoch mit einem Flanschelement, das an einen Planetenradträger angeschraubt ist.

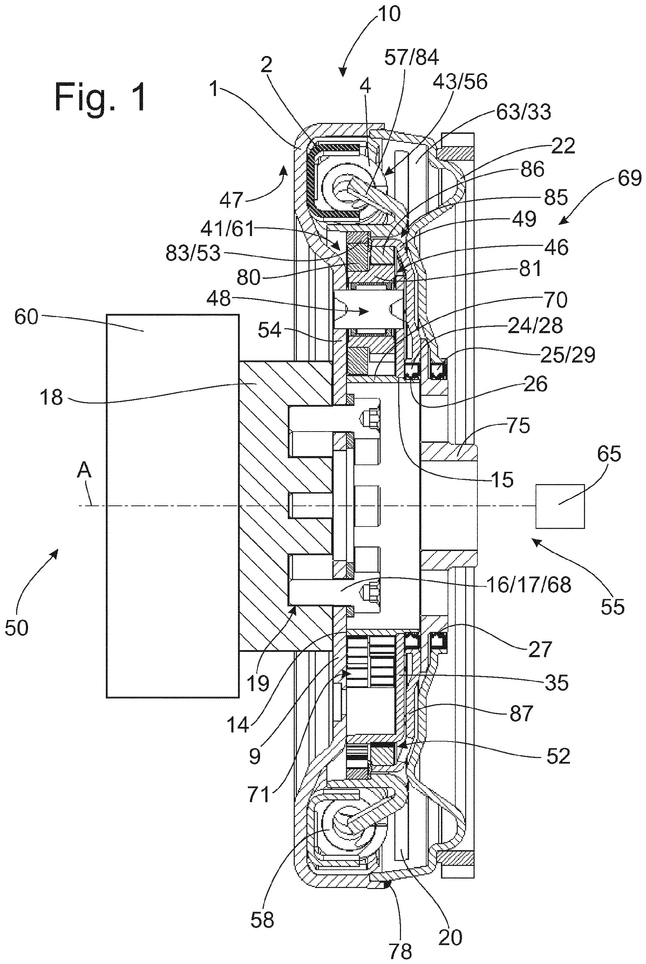

In Fig. 1 ist eine Drehschwingungsdämpfungsanordnung 10 dargestellt, welche nach dem Prinzip der Leistungs- bzw. Drehmomentenaufzweigung arbeitet. Die Drehschwingungsdämpfungsanordnung 10 kann in einem Antriebsstrang eines Fahrzeugs zwischen einem Antriebsaggregat 60 und dem folgenden Teil des Antriebsstrangs, also beispielsweise ein Anfahrelement 65, wie eine Reibungskupplung, ein hydrodynamischer Drehmomentwandler oder dergleichen, angeordnet werden.

Die Drehschwingungsdämpfungsanordnung 10 umfasst einen allgemein mit 50 bezeichneten Eingangsbereich. Dieser Eingangsbereich 50 kann beispielsweise wie hier durch eine Kurbelwellenschraube 17 an einer Kurbelwelle 18 eines als Verbrennungskraftmaschine ausgebildeten Antriebsaggregates 60 angebunden werden. Im Eingangsbereich 50 zweigt sich das von dem Antriebsaggregat 60 aufgenommene Drehmoment in einen ersten Drehmomentübertragungsweg 47 und einen zweiten Drehmomentübertragungsweg 48 auf. Im Bereich einer allgemein mit der Bezugsziffer 41 bezeichneten Koppelanordnung werden die über die beiden Drehmomentübertragungswege 47, 48 geleiteten Drehmomentenanteile mittels eines ersten Eingangsteils 53 und eines zweiten Eingangsteils 54 in die Koppelanordnung 41 eingeleitet und wieder zusammengeführt und dann zu einem Ausgangsbereich 55 weitergeleitet.

In dem ersten Drehmomentübertragungsweg 47 ist ein allgemein mit der Bezugsziffer 56 bezeichnetes Schwingungssystem integriert. Das Schwingungssystem 56 ist als eine Phasenschieberanordnung 43 wirksam und umfasst eine, beispielsweise an das Antriebsaggregat 60, anzubindende Primärmasse 1, sowie ein das Drehmoment weiterleitendes Zwischenelement 57, hier als ein Antriebshohlradträger 84 ausgebildet, an dem auch eine Zusatzmasse 20 drehfest angebracht sein kann, wie hier in Fig. 1 auch dargestellt. Die Primärmasse 1 und ein Abdeckelement 22, welche drehfest, bevorzugt mittels einer Schweißverbindung 78, miteinander verbunden sind, umschließen nach radial außen hin im Wesentlichen vollständig einen Raumbereich 33, in welchem in Bezug auf die radiale Anordnung eine Federanordnung 4 für das Schwingungssystem 56 aufgenommen ist. Die Federanordnung 4 umfasst eine Mehrzahl von in Umfangsrichtung aufeinander folgenden und ggf. auch ineinander geschachtelten angeordneten Federeinheiten 58, wobei jede Federeinheit vorzugsweise wenigstens eine Schraubendruckfeder oder eine Bogenfeder umfassen kann. Die Federeinheit 58 der Federanordnung 4 stützt sich einerseits mittels eines Ansteuerbleches 2 an der Primärmasse 1 und andererseits an einem Antriebselement 82 ab, wobei das Antriebselement 82 hier den Antriebshohlradträger 84 und ein damit drehfest verbundenes Antriebshohlrad 83 umfasst. Hier nicht dargestellt, kann das Antriebselement 82 auch aus einem Bauteil gefertigt sein. Die drehfeste Verbindung von Antriebshohlradträger 84 und Antriebshohlrad 83 ist vorzugsweise mittels einer Schweißverbindung, einer Nietverbindung, einer Schraubverbindung, einer Klebeverbindung oder einer vergleichbaren Verbindungsmethode angebracht. Das Antriebshohlrad 83 leitet das Drehmoment, das über den ersten Drehmomentübertragungsweg 47 und damit über die Phasenschieberanordnung 43 geleitet wurde an ein Planetenradelement 46 der Koppelanordnung 41. Das Planetenradelement 46 umfasst hier ein Antriebsplanetenrad 80 und ein Abtriebsplanetenrad 81, die axial gestaffelt angeordnet sind. Dabei stellt das Antriebshohlrad 83, das mit dem Antriebsplanetenrad 80 kämmt, das erste Eingangsteil 53 der Koppelanordnung 41 dar.

Im zweiten Drehmomentübertragungsweg 48, ausgehend von dem Antriebsaggregat 60, wird das Drehmoment über die Kurbelwelle 18 in das zweite Eingangsteil 54 geleitet. Dieses ist drehfest mit der Kurbelwelle 18, vornehmlich durch eine Schraubverbindung 68, hier mittels der Kurbelwellenschraube 17 ausgebildet, verbunden und bildet den Planetenradträger 9 der Koppelanordnung 41. Das Planetenradelement 46 der Koppelanordnung 41, das drehbar am Planetenradträger 9 mittels eines Planetenradbolzens 11 gelagert ist, führt den ersten Drehmomentübertragungsweg 47, der über das Antriebsholrad 83 in die Koppelanordnung 41 geleitet wird und den zweiten Drehmomentübertragungsweg 48, der über das zweite Eingangsteil 54, gebildet von dem Planetenradträger 9, geleitet wird, zu einem Drehmoment zusammen. Das zusammengeführt Drehmoment wird über ein Abtriebshohlrad 86 und einen damit drehfest verbundenen Abtriebshohlradträger 87, die beide zusammen ein Abtriebselement 85 bilden, an ein Ausgangsflanschelement 75, das drehfest mit dem Abtriebshohlradträger 87 verbunden ist und hier das Ausgangsteil 49 bildet, weitergeleitet und von da zum Beispiel an eine, hier nicht dargestellte, Sekundärmasse, eine Reibkupplung oder direkt an ein Getriebe abgegeben.

Um den Nassraum 63, der vornehmlich mit einem viskosen Medium wie Öl oder Fett befüllt ist, um die Reibung und damit den Verschleiß zu reduzieren, gegenüber einem Umgebungsbereich abzudichten, werden ein erstes Dichtungselement 24 und ein zweites Dichtungselement 25 verwendet. Dabei ist das erste Dichtungselement 24 zwischen dem Abtriebshohlradträger 87 und einem Flanschelement 70 positioniert. Zwischen dem Abtriebshohlradträger 87 und dem Flanschelement 70 kann eine relative Verdrehung erfolgen. Das erste Dichtungselement 24, das vornehmlich als ein Radialwellendichtring 28 ausgeführt ist, kann zwischen diesen beiden Bauteilen eingebaut werden und übernimmt eine abdichtende Funktion von dem Nassraum 63 zu dem Umgebungsbereich 69, auch wenn der Abtriebshohlradträger 87 und das Flanschelement 70 sich relativ zueinander verdrehen. Dabei ist hier das Flanschelement 70 an einem ersten Verbindungsbereich 14 verdrehfest, vornehmlich mittels einer Schweißverbindung, einer Klebeverbindung oder einer anderen vergleichbaren Verbindung, mit dem Planetenradträger 9 so verbunden, dass kein viskoses Medium aus dem Nassraum 63 an einem Verbindungsbereich des Flanschelements 70 mit dem Planetenradträger 9 zu dem Umgebungsbereich 69 austreten kann. An einem zweiten Verbindungsbereich 15 ist das Flanschelement 70 mit einem Abstützelement 35 drehfest verbunden und lagert den Planetenradbolzen 11, so dass der Planetenradbolzen 11 vorteilhaft gegen ein Kippen gesichert ist. Das Abstützelement 35 ist weiterhin an seinem radial äußeren Bereich drehfest mit dem Planetenradträger 9 vorteilhaft mittels einer Schweißverbindung, einer Schraubverbindung, einer Nietverbindung, einer Klebverbindung oder einer vergleichbaren Verbindung verbunden. Durch diese Ausführungsform ist der Planetenradbolzen 9 vorteilhaft gegen das Kippen gesichert.

Das zweite Dichtungselement 25 ist zwischen dem Abdeckelement 22 und dem Ausgangsflanschelement 75 positioniert. Zwischen dem Abdeckelement 22 und dem Ausgangsflanschelement 75 kann eine relative Verdrehung erfolgen. Dabei kann das zweite Dichtungselement 25, das ebenfalls vornehmlich als ein Radialwellendichtring 29 ausgeführt ist, den Nassraum 63 gegenüber dem Umgebungsbereich 69 abdichten, auch wenn zwischen dem Abdeckelement 22 und dem Ausgangsflanschelement 75 eine relative Verdrehung vorliegt.

Um eine kostengünstige Produktion zu ermöglichen ist eine Verwendung von Gleichteilen vorteilhaft. Aus diesem Grund sind hier das erste Dichtungselement 24 und das zweite Dichtungselement 25 baugleich ausgeführt. Es ergeben sich hier Vorteile bei einem Einkauf der Bauteile und bei einer Verwendung von einer geringeren Anzahl von Montagewerkzeugen, da nur eine Größe für die Dichtungselemente verwendet wird.

Dabei ist sind die Innendurchmesser 26: 27 des ersten und des zweiten Dichtungselements 24; 25 so groß ausgeführt, dass die Kurbelwellenschrauben 17 für eine Befestigung der Drehschwingungsdämpfungsanordnung 10 an die Kurbelwelle 18 innerhalb dieser Innendurchmesser 26: 27 erfolgen kann.

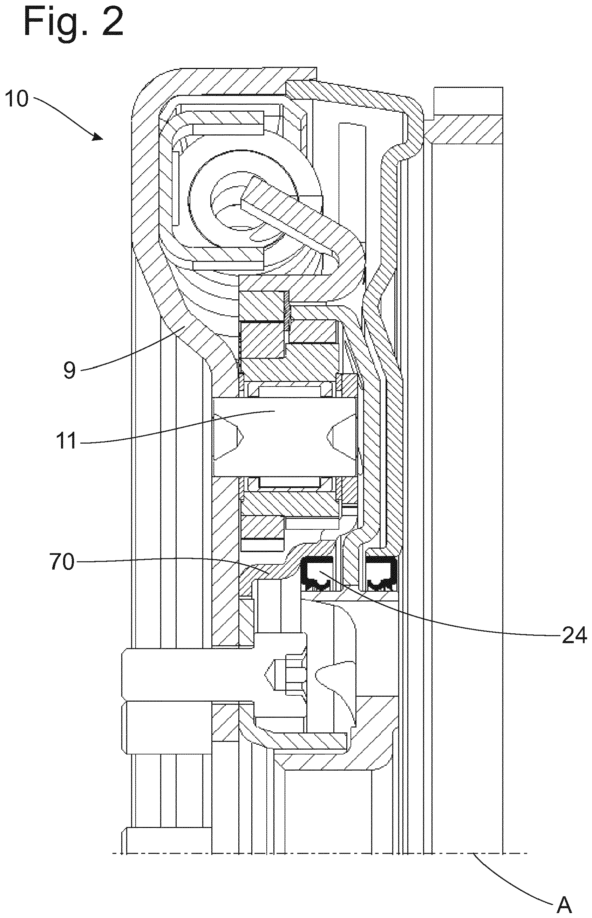

In Fig. 2 ist eine Drehschwingungsdämpfungsanordnung 10 wie in Fig. 1 dargestellt, jedoch mit einem Flanschelement 70, das topfförmig ausgebildet ist und zum einen das erste Dichtungselement 24 aufnimmt und zum anderen an seinem radial äußeren Bereich derart ausgeführt ist, dass das Flanschelement 70 als eine zusätzliche Abstützung für den Planetenradbolzen 11 verwendet wird. Auch hier kann das Flanschelement 70 mittels der bereits in Figur 1 genannten Verbindungen an den Planetenradträger 9 drehfest und undurchlässig gegen ein viskoses Medium befestigt werden.

In einer ähnlichen, hier nicht dargestellten Ausführungsform kann das Flanschelement in seinem radial inneren Bereich zumindest eine Durchgriffsöffnung besitzen, durch die die Kurbelwellenschraube geführt wird. Die Kurbelwellenschraube klemmt folglich das Flanschelement gegen den Planetenradträger drehfest und undurchlässig gegen ein viskoses Medium ein. In einer weiteren dazu zusätzlichen Ausführungsform kann der Klemmbereich des Flanschelements durch ein Wärmebehandlungsverfahren gehärtet sein und dient in dieser Ausführungsform als eine Unterlegscheibe für die Kurbelwellenschrauben und reduziert damit die Flächenpressung an einem Klemmbereich des Planetenradträgers .

Dabei kann das Flanschelement 70 in den bereits angeführten Ausführungsformen vorteilhaft und kostengünstig als ein Umformteil aus einem Blech hergestellt werden.

### Bezugszeichen

- 1: Primärmasse
- 2: Ansteuerblech
- 4: Federanordnung
- 9: Planetenradträger
- 10: Drehschwingungsdämpfungsanordnung
- 11: Planetenradbolzen
- 14: erster Verbindungsbereich
- 15: zweiter Verbindungsbereich
- 16: Befestigungselement
- 17: Kurbelwellenschraube
- 18: Kurbelwelle
- 19: Befestigungsdurchmesser
- 20: Zusatzmasse
- 22: Abdeckelement
- 24: erstens Dichtungselement
- 25: zweites Dichtungselement
- 26: erster Innendurchmesser
- 27: zweiter Innendurchmesser
- 28: Radialwellendichtring
- 29: Radialwellendichtring
- 33: Raumbereich
- 35: Abstützelement
- 43: Phasenschieberanordnung
- 41: Koppelanordnung
- 46: Planetenradelement
- 47: erster Drehmomentübertragungsweg
- 48: zweiter Drehmomentübertragungsweg
- 49: Ausgangsteil
- 50: Eingangsbereich
- 52: Überlagerungseinheit
- 53: erstes Eingangsteil
- 54: zweites Eingangsteil
- 55: Ausgangsbereich
- 56: Schwingungssystem
- 57: Zwischenelement
- 58: Federeinheit
- 60: Antriebsaggregat
- 61: Planetengetriebe
- 63: Nassraum
- 65: Anfahrelement
- 68: Schraubverbindung
- 69: Umgebungsbereich
- 70: Flanschelement
- 75: Ausgangsflanschelement
- 78: Schweißverbindung
- 80: Antriebsplanetenrad
- 81: Abtriebsplanetenrad
- 82: Antriebselement
- 83: Antriebshohlrad
- 84: Antriebshohlradträger
- 85: Abtriebselement
- 86: Abtriebshohlrad
- 87: Abtriebshohlradträger
- A: Drehachse

## Patentansprüche

1. Drehschwingungsdämpfungsanordnung (10) für den Antriebsstrang eines Kraftfahrzeugs, umfassend
- einen zur Drehung um eine Drehachse (A) anzutreibenden Eingangsbereich (50) und einen Ausgangsbereich (55) und
- einen ersten Drehmomentübertragungsweg (47) und parallel dazu einen zweiten Drehmomentübertragungsweg (48), die beide von dem Eingangsbereich (50) ausgehen und
- eine, mit dem Ausgangsbereich (55) in Verbindung stehende Koppelanordnung (41) zur Überlagerung der über die beiden Drehmomentübertragungswege (47; 48) geleiteten Drehmomente, wobei die Koppelanordnung (41) ein Planetengetriebe (61) mit einem Planetenradträger (9), einem Planetenradbolzen (11), ein Planetenradelement (46), ein Abtriebselement (85) und ein mit dem Abtriebselement (85) drehfest verbundenes Ausgangsflanschelement (75) umfasst, und
- eine Phasenschieberanordnung (43) für den ersten Drehmomentübertragungsweg (47) zur Erzeugung einer Phasenverschiebung von über den ersten Drehmomentübertragungsweg (47) geleiteten Drehungleichförmigkeiten bezüglich über den zweiten Drehmomentübertragungsweg (48) geleiteten Drehungleichförmigkeiten und
- einen Nassraum (63), der die Koppelanordnung (41) und die Phasenschieberanordnung (43) umschließt, und
- ein Flanschelement (70), das konzentrisch zur Drehachse A angeordnet ist und sich radial außerhalb eines Befestigungsdurchmessers (19) eines Befestigungselements (16) an ein Antriebsaggregat (60) und radial innerhalb des Planetengetriebes (61) positioniert ist, sowie
- einem Abdeckelement (22), das in axialer Richtung zu dem Ausgangsbereich (55) die Drehschwingungsdämpfungsanordnung (10) räumlich begrenzt,
wobei der Nassraum (63) zu einem Umgebungsbereich (69) mittels eines ersten Dichtungselements (24) und eines zweiten Dichtungselements (25) abgedichtet ist, wobei das erste Dichtungselement (24) und das zweite Dichtungselement (25) baugleich ausgeführt sind, **dadurch gekennzeichnet, dass** das erste Dichtungselement (24) zwischen dem Abtriebselement (85) und dem Flanschelement (70) angeordnet ist und dass das zweite Dichtungselement (25) zwischen dem Abdeckelement (22) und dem Abtriebsflanschelement (75) angeordnet ist.

2. Drehschwingungsdämpfungsanordnung (10) nach Anspruch 1, **dadurch gekennzeichnet, dass** die Koppelanordnung (41) ein erstes Eingangsteil (53), ein zweites Eingangsteil (54), eine Überlagerungseinheit (52) und ein Ausgangsteil (49) umfasst, wobei das erste Eingangsteil (53) mit der Phasenschieberanordnung (43) und der Überlagerungseinheit (52) verbunden ist und das zweite Eingangsteil (54) mit dem Eingangsbereich (50) und der Überlagerungseinheit (52) verbunden ist und die Überlagerungseinheit (52) sowohl mit dem ersten Eingangsteil (53), als auch mit dem zweiten Eingangsteil (54) und dem Ausgangsteil (49) verbunden ist und wobei das Ausgangsteil (49) den Ausgangsbereich (55) bildet.

3. Drehschwingungsdämpfungsanordnung (10) nach Anspruch 1 oder 2, **dadurch gekennzeichnet, dass** die Phasenschieberanordnung (43) ein Schwingungssystem (56) mit einer Primärmasse (1) und einer gegen die Wirkung einer Federanordnung (4) bezüglich der Primärmasse (1) um die Drehachse (A) drehbares Zwischenelement (57) umfasst.

4. Drehschwingungsdämpfungsanordnung (10) nach einem der vorhergehenden Ansprüche 1 bis 3, **dadurch gekennzeichnet, dass** ein erster und ein zweiter Innendurchmesser (26; 27) des ersten und des zweiten Dichtungselements (24; 25) größer ist, als der Befestigungsdurchmesser (19) mit dem die Drehschwingungsdämpfungsanordnung (10) an dem Antriebsaggregat (60) drehfest befestigt ist.

5. Drehschwingungsdämpfungsanordnung (10) nach einem der Ansprüche 1 bis 4, **dadurch gekennzeichnet, dass** das erste und das zweite Dichtungselement (24; 25) ein Radialwellendichtring (28; 29) ist.

6. Drehschwingungsdämpfungsanordnung (10) nach einem der Ansprüche 1 bis 5, **dadurch gekennzeichnet, dass** das Flanschelement (70) drehfest mit dem Planetenradträger (9) verbunden ist.

7. Drehschwingungsdämpfungsanordnung (10) nach einem der Ansprüche 1 bis 5, **dadurch gekennzeichnet, dass** das Flanschelement (70) mittels zumindest eines des Befestigungselements (16) drehfest mit der Primärmasse (1) an dem Antriebsaggregat (60) befestigt ist.

8. Drehschwingungsdämpfungsanordnung (10) nach einem der Ansprüche 5 oder 6, **dadurch gekennzeichnet, dass** das Flanschelement (70) den Planetenradbolzen (11) auf einer Seite abstützt

9. Drehschwingungsdämpfungsanordnung (10) nach einem der Ansprüche 1 bis 8, **dadurch gekennzeichnet, dass** der Nassraum (63) ein viskoses Medium umfasst.

## Claims

1. Torsional vibration damper arrangement (10) for the drive train of a motor vehicle, comprising
- an input region (50) and an output region (55) which are to be driven in rotation about a rotational axis (A), and
- a first torque-transmission path (47), and parallel thereto, a second torque-transmission path (48), which both proceed from the input region (50), and
- a coupling arrangement (41) which is connected to the output region (55) and has the purpose of superimposing the torques which are conducted via the two torque-transmission paths (47; 48), wherein the coupling arrangement (41) comprises a planetary gear mechanism (61) with a planetary gear carrier (9), a planetary gear bolt (11), a planetary gear element (46), an output element (85) and an output flange element (75) which is connected in a rotationally fixed fashion to the output element (85), and
- a phase shifter arrangement (43) for the first torque-transmission path (47) for generating a phase shift of rotation irregularities conducted via the first torque-transmission path (47) with respect to rotation irregularities conducted via the second torque-transmission path (48), and
- a wet space (63) which encloses the coupling arrangement (41) and the shifter arrangement (43), and
- a flange element (70) which is arranged concentrically with respect to the rotational axis (A) and is positioned radially outside an attachment diameter (19) of an attachment element (16) to a drive assembly (60) and radially inside the planetary gear mechanism (61), and
- a cover element (22) which spatially bounds the torsional vibration damper arrangement (10) with respect to the output region (55) in the axial direction,
wherein the wet space (63) is sealed off from a surrounding region (69) by means of a first sealing element (24) and a second sealing element (25), wherein the first sealing element (24) and the second sealing element (25) are implemented in a structurally identical fashion, **characterized in that** the first sealing element (24) is arranged between the output element (85) and the flange element (70), and **in that** the second sealing element (25) is arranged between the cover element (22) and the output flange element (75).

2. Torsional vibration damper arrangement (10) according to Claim 1, **characterized in that** the coupling arrangement (41) comprises a first input part (53), a second input part (54), a superimposition unit (52) and an output part (49), wherein the first input part (53) is connected to the phase shifter arrangement (43) and to the superimposition unit (52), and the second input part (54) is connected to the input region (50) and to the superimposition unit (52), and the superimposition unit (52) is connected to the first input part (53), and to the second input part (54) and to the output part (49), and wherein the output part (49) forms the output region (55).

3. Torsional vibration damper arrangement (10) according to Claim 1 or 2, **characterized in that** the phase shifter arrangement (43) comprises an oscillation system (56) with a primary mass (1) and an intermediate element (57) which can rotate with respect to the primary mass (1) about the rotational axis (A), counter to the effect of a spring arrangement (4).

4. Torsional vibration damper arrangement (10) according to one of the preceding Claims 1 to 3, **characterized in that** a first and a second internal diameter (26; 27) of the first and second sealing elements (24; 25) are larger than the attachment diameter (19) with which the torsional vibration damper arrangement (10) is attached in a rotationally fixed fashion to the drive assembly (60).

5. Torsional vibration damper arrangement (10) according to one of Claims 1 to 4, **characterized in that** the first and second sealing elements (24; 25) are radial shaft sealing rings (28; 29).

6. Torsional vibration damper arrangement (10) according to one of Claims 1 to 5, **characterized in that** the flange element (70) is connected in a rotationally fixed fashion to the planetary gear carrier (9).

7. Torsional vibration damper arrangement (10) according to one of Claims 1 to 5, **characterized in that** the flange element (70) is attached to the drive assembly (60) so as to be rotationally fixed to the primary mass (1) by means of at least one the attachment element (16).

8. Torsional vibration damper arrangement (10) according to one of Claims 5 or 6, **characterized in that** the flange element (70) supports the planetary gear bolt (11) on one side.

9. Torsional vibration damper arrangement (10) according to one of Claims 1 to 8, **characterized in that** the wet space (63) comprises a viscous medium.

## Revendications

1. Système d'amortissement de vibrations de torsion (10) pour la chaîne cinématique d'un véhicule automobile, comprenant:
- une région d'entrée (50) à entraîner en rotation autour d'un axe de rotation (A) et une région de sortie (55) et
- un premier chemin de transmission de couple (47) et parallèlement à celui-ci un deuxième chemin de transmission de couple (48), qui partent tous les deux de la région d'entrée (50) et
- un dispositif de couplage (41) se trouvant en liaison avec la région de sortie (55) pour la superposition des couples conduits sur les deux chemins de transmission de couple (47; 48), dans lequel le dispositif de couplage (41) comprend un engrenage planétaire (61) avec un porte-satellites (9), un axe de roue planétaire (11), un élément de roue planétaire (46), un élément de sortie (85) et un élément de bride de sortie (75) assemblé sans rotation à l'élément de sortie (85), et
- un dispositif de glissement de phase (43) pour le premier chemin de transmission de couple (47) afin de produire un glissement de phase d'irrégularités de rotation conduites sur le premier chemin de transmission de couple (47) par rapport à des irrégularités de rotation conduites sur le deuxième chemin de transmission de couple (48), et
- une chambre humide (63), qui entoure le dispositif de couplage (41) et le dispositif de glissement de phase (43), et
- un élément de bride (70), qui est disposé de façon concentrique à l'axe de rotation A et qui est positionné radialement à l'extérieur d'un diamètre de fixation (19) d'un élément de fixation (16) à un ensemble d'entraînement (60) et radialement à l'intérieur de l'engrenage planétaire (61), ainsi que
- un élément de recouvrement (22), qui limite spatialement le système d'amortissement de vibrations de torsion (10) en direction axiale vers la région de sortie (55),
dans lequel la chambre humide (63) est étanche par rapport à une région ambiante (69) au moyen d'un premier élément d'étanchéité (24) et d'un deuxième élément d'étanchéité (25), dans lequel le premier élément d'étanchéité (24) et le deuxième élément d'étanchéité (25) sont de construction identique, **caractérisé en ce que** le premier élément d'étanchéité (24) est disposé entre l'élément de sortie (85) et l'élément de bride (70) et **en ce que** le deuxième élément d'étanchéité (25) est disposé entre l'élément de recouvrement (22) et l'élément de sortie (75).

2. Système d'amortissement de vibrations de torsion (10) selon la revendication 1, **caractérisé en ce que** le dispositif de couplage (41) comprend une première partie d'entrée (53), une deuxième partie d'entrée (54), une unité de superposition (52) et une partie de sortie (49), dans lequel la première partie d'entrée (53) est reliée au dispositif de glissement de phase (43) et à l'unité de superposition (52) et la deuxième partie d'entrée (54) est reliée à la région d'entrée (50) et à l'unité de superposition (52) et l'unité de superposition (52) est reliée aussi bien à la première partie d'entrée (53) qu'à la deuxième partie d'entrée (54) et à la partie de sortie (49) et dans lequel la partie de sortie (49) forme la région de sortie (55).

3. Système d'amortissement de vibrations de torsion (10) selon la revendication 1 ou 2, **caractérisé en ce que** le dispositif de glissement de phase (43) comprend un système de vibration (56) avec une masse primaire (1) et un élément intermédiaire (57) tournant autour de l'axe de rotation (A) par rapport à la masse primaire (1) contre l'action d'un dispositif de ressort (4).

4. Système d'amortissement de vibrations de torsion (10) selon l'une quelconque des revendications précédentes 1 à 3, **caractérisé en ce qu'**un premier et un deuxième diamètre intérieur (26; 27) du premier et du deuxième élément d'étanchéité (24; 25) est plus grand que le diamètre de fixation (19) avec lequel le système d'amortissement de vibrations de torsion (10) est fixé sans rotation à l'ensemble d'entraînement (60) .

5. Système d'amortissement de vibrations de torsion (10) selon l'une quelconque des revendications 1 à 4, **caractérisé en ce que** le premier et le deuxième élément d'étanchéité (24; 25) est un joint d'arbre radial (28; 29) .

6. Système d'amortissement de vibrations de torsion (10) selon l'une quelconque des revendications 1 à 5, **caractérisé en ce que** l'élément de bride (70) est assemblé sans rotation au porte-satellites (9).

7. Système d'amortissement de vibrations de torsion (10) selon l'une quelconque des revendications 1 à 5, **caractérisé en ce que** l'élément de bride (70) est fixé au moyen d'au moins un l'élément de fixation (16) sans rotation à la masse primaire (1) sur l'ensemble d'entraînement (60).

8. Système d'amortissement de vibrations de torsion (10) selon une des revendications 5 ou 6, **caractérisé en ce que** l'élément de bride (70) supporte sur un côté l'axe de roue planétaire (11).

9. Système d'amortissement de vibrations de torsion (10) selon l'une quelconque des revendications 1 à 8, **caractérisé en ce que** la chambre humide (63) comprend un fluide visqueux.
